# FASCICULE DE BREVET EUROPEEN

(11) **EP 2 536 575 B1**
(45) Date de publication et mention de la délivrance du brevet: **25.12.2013**
(21) Numéro de dépôt: 11709994.5
(22) Date de dépôt: 17.02.2011
(51) Int. Cl.: B60B 33/02

(54) **ROULETTE POUR MEUBLE OU ANALOGUE AVEC MOYENS DE BLOCAGE**
MÖBELROLLBRETT ODER ÄHNLICHES MIT SPERRMITTEL
FURNITURE CASTER OR THE LIKE HAVING LOCKING MEANS

(30) Priorité: 19.02.2010 FR 1000688
(43) Date de publication de la demande: 26.12.2012
(73) Titulaire: TENTE ROULETTES POLYMERES-BRUANDET, 39700 La Barre (FR)
(72) Inventeur: DAYT, Patrick, F-25000 Besançon (FR)
(74) Mandataire: Flavenot, Bernard
(86) Numéro de dépôt international: PCT/FR2011/000098
(87) Numéro de publication internationale: WO 2011/101562

(56) Documents cités:
- EP-A2- 1 629 999
- WO-A1-2007/074221
- DE-C1- 19 721 033
- DE-U1-202007 015 784
- DE-U1-202008 010 367
- US-A1- 2009 276 977

## Description

La présente invention concerne les roulettes pour meubles ou analogues qui comportent essentiellement un carter destiné à supporter et protéger les roues, et un pivot qui assure la liaison entre le carter et le meuble.

Nombre de telles roulettes trouvent une application particulièrement avantageuse pour aider au déplacement des lits, fauteuils, tables, chariots, etc., plus particulièrement en milieu hospitalier ou analogue.

La structure d'une telle roulette doit donc être conçue de façon qu'elle permette de déplacer les meubles, comme des lits médicaux, dans toutes les directions. En particulier, elle comporte au moins une roue, généralement deux roues en parallèle, et des moyens pour que la roue puisse tourner autour d'un axe horizontal par rapport au carter dans le but d'assurer le déplacement du meuble en translation rectiligne, ainsi que des moyens pour que le carter puisse pivoter autour d'un axe sensiblement vertical par rapport au meuble pour que la roulette puisse prendre toutes directions par rapport au meuble.

Cependant, quand le meuble est par exemple presque arrivé dans sa position définitive, il est parfois nécessaire de bloquer la roulette en orientation tout en permettant à sa roue de continuer à tourner autour de son axe horizontal pour faire subir au lit par exemple une translation supplémentaire parfaitement rectiligne sans qu'il puisse changer d'orientation. Quand le lit est arrivé dans sa position définitive, il est alors nécessaire de bloquer la rotation de la roue pour empêcher le lit de subir tout autre déplacement.

Dans d'autres circonstances, il peut être nécessaire de bloquer la roulette à la fois en orientation et en translation.

Il existe déjà de telles roulettes qui tentent de répondre aux conditions définies ci-dessus, celles décrites et illustrées dans le Brevet Allemand N° 19721033 et le US-A-2009/276977. Cependant, elles ne donnent pas entière satisfaction tant sur le plan fonctionnel que sur le plan structurel.

Aussi la présente invention a-t-elle pour but de réaliser une roulette qui tente de répondre aux buts mentionnés ci-dessus, présentant une structure qui permet de réaliser de façon industrielle les pièces la constituant et d'assembler facilement ces pièces pour obtenir la roulette sous sa forme définitive.

Plus précisément, la présente invention a pour objet une roulette à blocages combinés comprenant : un carter, au moins une roue, des moyens pour monter la roue en rotation par rapport au carter sur un arbre défini selon un premier axe, un pivot défini selon un second axe, des moyens pour monter le pivot en rotation par rapport au carter de façon que le second axe soit sensiblement perpendiculaire au premier axe, des premiers moyens de blocage commandables pour bloquer la rotation du pivot par rapport au carter, des premiers moyens de commande pour actionner lesdits premiers moyens de blocage commandables, des seconds moyens de blocage commandables pour bloquer la rotation de la roue par rapport au carter, et des seconds moyens de commande pour actionner lesdits seconds moyens de blocage commandables,
caractérisée par le fait qu'elle comporte en outre des moyens pour coupler lesdits premiers et seconds moyens de commande de façon que, lorsque les premiers moyens de blocage commandables sont seuls actionnés par lesdits premiers moyens de commande, les seconds moyens de blocage commandables ne sont pas actionnés et que, lorsque au moins les seconds moyens de blocage commandables sont actionnés par lesdits seconds moyens de commande, les premiers moyens de blocage commandables sont eux aussi actionnés par lesdits premiers moyens de commande.

D'autres caractéristiques et avantages de l'invention apparaîtront au cours de la description suivante donnée en regard des dessins annexés à titre illustratif mais nullement limitatif, dans lesquels :
La figure 1 est une vue de face d'un premier mode de réalisation de la roulette selon l'invention,
La figure 2 est une vue en coupe, de côté et en légère perspective, de la roulette selon l'invention en accord avec le mode de réalisation illustré sur la figure 1, permettant de mettre en évidence certains des principaux moyens structurels de la roulette, plus particulièrement ceux relatifs aux moyens de blocage du pivot par rapport au carter,
La figure 3 est une vue en perspective permettant de mieux mettre en évidence la coopération de deux des éléments illustrés sur la figure 2,
La figure 4 est une vue en coupe, de côté et en légère perspective, de la roulette selon l'invention en accord avec le mode de réalisation illustré sur les figures 1 à 3, permettant de mettre en évidence certains autres moyens structurels de la roulette, particulièrement ceux relatifs aux moyens de blocage d'au moins une roue par rapport au carter (dans cette figure 4, pour la clarté du dessin, la première pédale décrite ci-après a été enlevée),
La figure 5 est une vue en perspective d'une partie de la roulette selon l'invention en accord avec le mode de réalisation illustré sur les figures 1 à 4, permettant de mieux mettre en évidence des éléments coopérant entre eux, illustrés plus particulièrement sur la figure 4,
La figure 6 est une vue en perspective permettant d'expliciter d'autres moyens constitutifs de la roulette selon l'invention en accord avec le mode de réalisation illustré sur les figures 1 à 5,
La figure 7 est une vue de côté d'un second mode de réalisation de la roulette selon l'invention,
La figure 8 est une vue en perspective de la partie encadrée E de la réalisation illustrée sur la figure 7, dans une configuration dite "de blocage", et
La figure 9 est une vue de côté de la partie encerclée C de la figure 8, dans une configuration dite "de non-blocage".

La présente invention concerne une roulette comprenant un carter 10, au moins une roue 12, 14, des moyens pour monter la roue en rotation par rapport au carter sur un arbre 16 défini selon un premier axe 18, un pivot 20 défini selon un second axe 22, et des moyens 24 pour monter le pivot 20 en rotation par rapport au carter 10 de façon que le second axe 22 soit sensiblement perpendiculaire au premier axe 18.

La roulette comprend aussi des premiers moyens de blocage commandables 100 pour bloquer la rotation du pivot 20 par rapport au carter 10, des premiers moyens de commande 102 pour actionner les premiers moyens de blocage commandables 100, des seconds moyens de blocage commandables 200 pour bloquer la rotation de la roue 12, 14 par rapport au carter 10, et des seconds moyens de commande 202 pour actionner les seconds moyens de blocage commandables 200.

Une roulette ayant les caractéristiques définies ci-dessus par leurs fonctions premières, est connue notamment par le WO2007/074221 au nom de la Demanderesse, dont la description fait partie intégrante de la présente description.

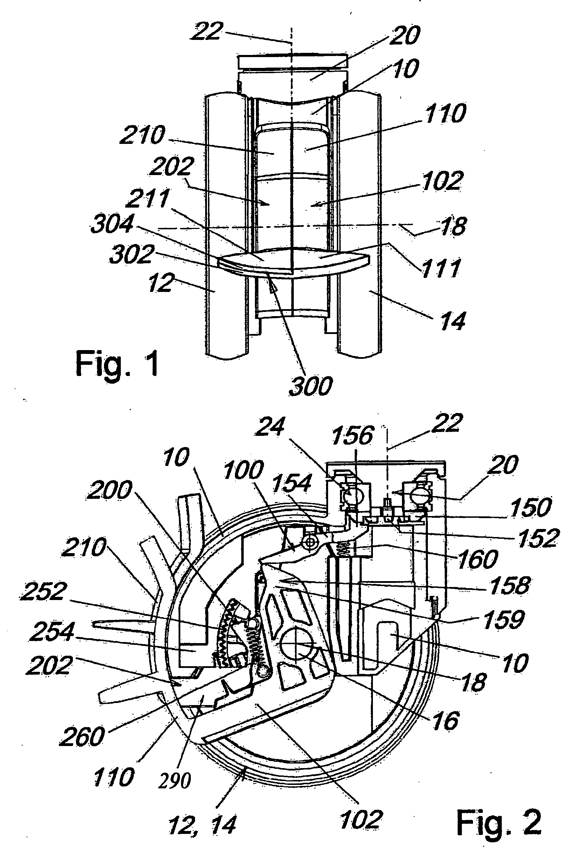

Selon d'autres caractéristiques de l'invention, la roulette comporte en outre des moyens 300, figure 1, pour coupler les premiers et seconds moyens de commande 102, 202 de façon que, lorsque les premiers moyens de blocage commandables 100 sont seuls actionnés par les premiers moyens de commande, les seconds moyens de blocage commandables 200 ne sont pas actionnés et que, lorsque au moins les seconds moyens de blocage commandables 200 sont actionnés par les seconds moyens de commande 202, les premiers moyens de blocage commandables 100 sont eux aussi actionnés par les premiers moyens de commande 102.

Ces caractéristiques permettent à la roulette selon l'invention d'atteindre les buts définis au préambule de la présente description.

Il est tout d'abord précisé que, par "moyens de blocage commandables" pour bloquer la rotation d'un élément par rapport à un autre, on entend tous moyens qui permettent de réaliser cette fonction. Ils peuvent notamment comprendre des freins, par exemple à friction ou analogue, mais aussi des moyens par engrenage entre un doigt solidaire de l'un des deux éléments et apte à se positionner dans une rainure solidaire de l'autre élément. Ces derniers moyens par engrenage seront, si de besoin, dénommés dans la présente description sous le terme générique "crans".

La roulette selon l'invention telle que définie ci-dessus est très avantageusement réalisée comme illustré sur les figures 1 à 6 annexées.

Selon ce premier mode de réalisation, figures 1 à 6, les premiers et seconds moyens de commande 102, 202 pour actionner respectivement les premiers et seconds moyens de blocage commandables 100, 200 comportent, plus particulièrement en référence aux figures 1, 2 et 4, respectivement une première pédale 110 et une seconde pédale 210 montées toutes les deux en rotation sur l'arbre 16, chaque pédale 110, 210 ayant au moins une extrémité 111, 211 qui émergé du carter 10, par exemple une plaquette sur laquelle il est possible de poser le pied pour actionner la pédale, chaque pédale 110, 210 étant montée rotative sur cet arbre 16 de façon à prendre toutes positions entre deux positions dites "position de repos" et "position d'actionnement".

La position de repos est celle dans laquelle une pédale n'actionne pas les moyens de blocage commandables correspondants 100, 200 (figures 1 et 2), et la position d'actionnement est celle dans laquelle une pédale actionnent les moyens de blocage commandables correspondants 100, 200 (sur la figure 2 : position d'actionnement pour la pédale 110, position de repos pour la pédale 210).

Selon ce mode de réalisation dans lequel les moyens de commande 102, 202 sont constitués de pédales, les moyens de couplage 300 sont très avantageusement constitués, figure 1, d'une butée 302 réalisée sur la première pédale 110, par exemple sur son extrémité émergente 111, et d'une contre butée 304 réalisée sur la seconde pédale 210, qui est constituée par l'extrémité émergente elle-même 211 de la seconde pédale 210.

Ces butée 302 et contre butée 304 sont agencées l'une par rapport à l'autre sur leur pédale respective de façon :
- que la contre butée 304 soit au contact de la butée 302 lorsque les deux pédales 110, 210 sont toutes les deux dans leur position de repos,
- que, lorsque la première pédale 110 est seule entraînée en rotation autour du premier axe 18 pour passer de sa position de repos à sa position d'actionnement, la butée 302 s'éloigne de la contre butée 304,
- et que, lorsque la seconde pédale 210 est entraînée en rotation autour du premier axe 18 pour passer de sa position de repos à sa position d'actionnement, la contre butée 304 entraîne la butée 302 dans le même mouvement de rotation, et entraîne donc corrélativement la première pédale 110 pour la faire passer, elle aussi, de sa position de repos à sa position d'actionnement.

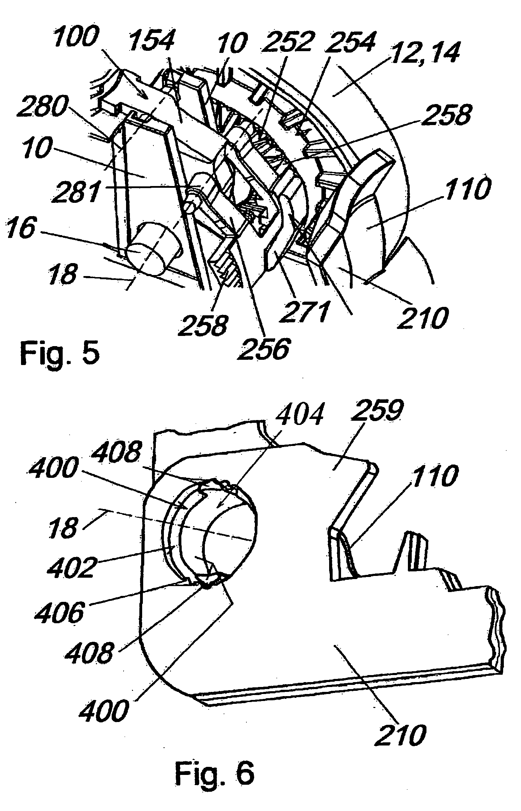

Dans un but qui sera explicité ci après, la roulette comporte en outre des moyens de liaison 400, figure 6, montés en coopération entre les deux pédales 110, 210, ces moyens de liaison étant agencés de façon que les deux pédales soient légèrement maintenues l'une par rapport à l'autre dans au moins une position donnée, et peuvent être dégagées de cette position donnée lorsqu'elles sont soumises à un couple de forces relativement faible.

Selon une réalisation possible préférentielle sur le plan de la fabrication industrielle, notamment par moulage avec des matières comme des matières plastiques, ces moyens de liaison 400 sont constitués d'un orifice cylindrique de révolution 402 réalisé sur l'une des deux pédales (sur la figure 6, cet orifice est réalisé sur la pédale 210), l'axe de cet orifice étant confondu avec le premier axe 18, d'au moins une partie de manchon 404 cylindrique de révolution réalisée en saillie sur l'autre pédale (la pédale 110 dans le mode de réalisation illustré) et d'un diamètre au plus égal à celui de l'orifice 402 pour y plonger, de deux ensembles d'ergots 406, 408 réalisés respectivement sur les faces cylindriques en regard de l'orifice 402 et de la partie de manchon 404 (par "ensembles", il est compris que l'un des ensembles comporte une pluralité d'ergots et que l'autre ne peut en comporter qu'un), de façon qu'au moins un ergot d'un ensemble coopère par engrenage entre deux ergots de l'autre ensemble et soit apte à surmonter les ergots de cet autre ensemble par déformation élastique suite à l'application d'une force sur l'une des pédales par rapport à l'autre pédale. La fonction de ces deux ensembles d'ergots sera définie ci-après dans la partie de description relative à l'utilisation de la roulette.

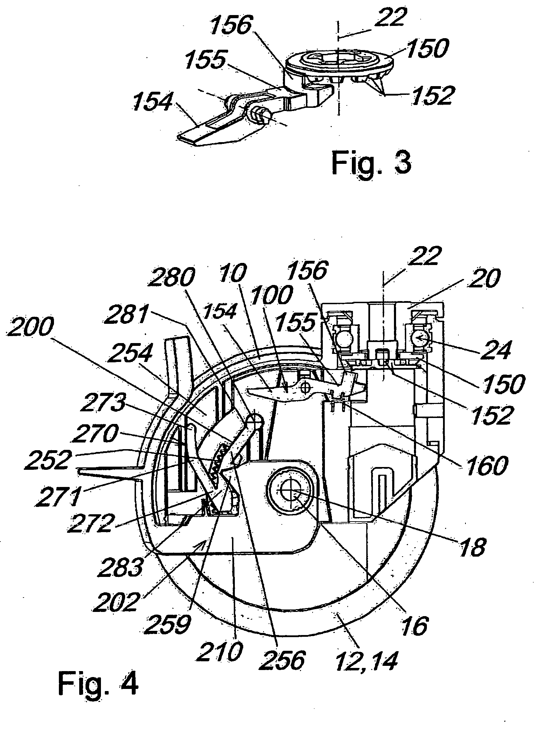

Comme mentionné auparavant, la roulette comporte des premiers moyens de blocage commandables 100 pour bloquer la rotation du pivot 20 par rapport au carter 10. Selon une première réalisation, ces moyens 100 comportent, plus particulièrement par référence aux figures 2 et 3, et partiellement illustré sur les figures 4 et 5, une couronne 150 comportant des premiers crans mâles et femelles 152, cette couronne étant montée en coopération, par exemple par fixation solidaire, avec le pivot 20 de façon coaxiale, un premier levier 154, une extrémité 155 du premier levier comportant au moins un deuxième cran mâle 156, ce premier levier étant en outre monté rotatif entre une première position et une seconde position par rapport au carter 10 de façon que, dans sa première position (figures 2 et 3), le deuxième cran mâle 156 pénètre dans l'un des premiers crans femelles et que, dans sa seconde position (figure 4), le deuxième cran mâle 156 ne coopère avec aucun des premiers crans 152.

Ces moyens de blocage commandables 100 comportent en outre des premiers moyens de rappel élastiques 160 pour tendre à ramener le premier levier 154 de sa seconde position à sa première position, et des premiers moyens 158 pour commander la rotation du premier levier 154 entre ses première et seconde positions, ces premiers moyens de commande de la rotation du premier levier étant montés en coopération sur la première pédale 110.

Dans une réalisation possible, ces premiers moyens de commande de la rotation du premier levier sont constitués d'une partie en saillie 159 agencée solidaire sur la première pédale 110 de façon que, lorsque cette dernière est dans sa position de repos, la partie en saillie 159 agisse sur le premier levier 154 pour le faire pivoter dans le sens dextrorsum selon les figures et se placer dans sa seconde position, celle où le cran 156 ne coopère pas avec les crans 152, et qu'en revanche le premier levier comprime le ressort 160. Quand la première pédale 110 est pivotée dans le sens senestrorsum pour se placer dans la position d'actionnement (figure 2), la partie en saillie 159 libère au moins partiellement la rotation du premier levier 154 qui, sous l'action du ressort 160, pivote dans le sens senestrorsum de façon que le cran 156 vienne se placer dans l'un des crans 152 de la couronne 150 pour la bloquer par rapport au carter auquel le premier levier 154 est lié.

Quant aux seconds moyens de blocage commandables 200 pour bloquer la rotation de la roue 12, 14 par rapport au carter, ils comportent, de façon très avantageuse, des troisièmes crans mâles et femelles 252 réalisés sur la face 254 de la roue à bloquer, qui est tournée vers le carter 10 (figures 2, 4 et 5), et un second levier 256 monté rotatif sur le carter par une première extrémité 281 autour d'un troisième axe 280 sensiblement parallèle au premier axe 18 (figures 4 et 5), ce second levier portant au moins un quatrième cran mâle 258 (avantageusement une pluralité de crans) complémentaire des troisièmes crans femelles 252 (figure 5) et étant monté rotatif par rapport au carter 10 entre une troisième position et une quatrième position de façon que, dans la troisième position du second levier 256, le quatrième cran mâle 258 pénètre dans l'un des troisièmes crans femelles 252 et que, dans la quatrième position du second levier, le quatrième cran 258 ne coopère avec aucun des troisièmes crans 252.

Ces seconds moyens de blocage commandables 200 comportent aussi des moyens de tension élastiques 270 pour tendre à maintenir le second levier 256 dans sa quatrième position, des seconds moyens 290 pour commander la rotation de ce second levier entre ses quatrième et troisième positions, ces seconds moyens 290 de commande de la rotation du second levier étant montés en coopération sur la seconde pédale 210, et avantageusement en outre des troisièmes moyens de rappel commandables 260, comme un ressort en traction visible sur la figure 2, pour tendre à faire passer la seconde pédale 210 de sa position d'actionnement à sa position de repos.

Selon une réalisation possible, les moyens de tension élastiques 270 pour tendre à maintenir le second levier 256 dans sa quatrième position sont constitués d'une lame ressort 271 (figures 4 et 5) dont une première extrémité 272 est solidaire de la seconde extrémité 283 du second levier 256 de façon à former avec ce second levier sensiblement un V, la seconde extrémité 273 de la lame ressort 271 coopérant avec le carter 10 par glissement au contact sur sa surface intérieure. Ils peuvent aussi être constitués par tout autre moyen de ressort élastique.

Les seconds moyens 290 pour commander la rotation du second levier 256 entre ses quatrième et troisième positions montés en coopération sur la seconde pédale 210 sont avantageusement constitués d'une autre partie en saillie 259 (figures 4 et 6) agencée solidaire sur la seconde pédale 210 de façon que, lorsque cette dernière est dans sa position de repos, la partie en saillie agisse sur le second levier 256 pour le faire pivoter dans le sens senestrorsum selon les figures, pour qu'il se place dans sa seconde position, automatiquement sous l'action du ressort 260 et de la lame ressort 271, c'est-à-dire la position dans laquelle le cran 258 ne coopère pas avec les crans 252. En revanche, quand la pédale 210 est pivotée dans le sens senestrorsum pour se placer dans la position d'actionnement, la partie en saillie 259 entraîne le second levier 256 en rotation dans le sens dextrorsum (figure 4) et bande la lame ressort 271, le (les) quatrième(s) cran(s) mâle(s) 258 venant alors se placer dans l'un des crans 252 réalisés sur la face 254 de la roue (ou des roues) 12, 14, pour la (les) bloquer par rapport au carter auquel le second levier 256 est lié.

La roulette décrite ci-dessus en regard des figures 1 à 6 s'utilise de la façon suivante :
Il est tout d'abord supposé que la roulette est fixée solidairement, de façon connue, sur le pied d'un meuble, comme un lit médical ou analogue, via le pivot 20 et que la roulette est dans une configuration qui permette au lit de se déplacer en tous sens et toutes directions.

Dans ces conditions, les deux pédales 110, 210 sont toutes les deux dans leur position de repos, figure 1, la contre butée 304 sur la butée 302.

Le premier levier 154 est dans sa seconde position comprimant le ressort 160, avec le cran 156 non positionné dans les crans 152. Le second levier 256 est dans sa quatrième position, avec le quatrième cran 258 non positionné dans les troisièmes crans 252. La lame ressort 271 est détendue, ainsi que le ressort 260.

Si un utilisateur veut bloquer la rotation du pivot 20 par rapport au carter 10, il abaisse l'extrémité 111 de la première pédale 110 pour faire pivoter cette première pédale dans le sens senestrorsum, figure 2, ce qui libère la rotation du premier levier 154 qui pivote alors dans le sens senestrorsum sous l'action du ressort qui a été comprimé 160 et qui, en étant libéré, se détend pour pousser sur l'extrémité 155 du premier levier 154.

Le cran 156 porté par le premier levier 154 vient se loger dans l'un des crans 152 de la couronne 150 qui est solidaire du pivot 20, bloquant ainsi la rotation du pivot 20 par rapport au carter, et donc aussi le pivotement de la roulette par rapport au lit suivant l'axe de rotation 22, puisque le pivot 20 est fixé par rapport au pied du lit.

En revanche, la roue (ou les deux roues) 12, 14 peut toujours tourner autour du premier axe 18 puisque cette roue n'est pas bloquée par rapport au carter 10, ce qui permet de déplacer le lit en translation rectiligne.

Si l'utilisateur veut bloquer la rotation de la roue 12, 14 par rapport au carter 10, il abaisse l'extrémité 211 de la seconde pédale pour lui faire subir une rotation senestrorsum, figure 4, de façon que la partie en saillie 259 vienne pousser le second levier 256 pour le faire passer par rotation dextrorsum autour de son axe 280 de sa quatrième position à sa troisième position en bandant la lame ressort 271 et en comprimant le ressort 260 jusqu'à ce que les crans 258 viennent se loger dans les crans 252.

Il est à noter que, comme décrit ci-dessus, la roulette comporte des moyens de liaison 400 agencés de façon que les ergots des deux ensembles 406, 408 coopèrent entre eux par engrenage pour maintenir relativement fermement les deux pédales 110 et 210 quand elles sont toutes les deux simultanément, soit dans leur position de repos, soit dans leur position d'actionnement (figure 6).

Il est bien précisé que la première pédale 110 est maintenue dans sa position d'actionnement par le premier levier 154 qui est soumis lui-même à l'action en pression du ressort 160, et que cette première pédale 110 maintient à son tour la seconde pédale 210 dans sa position d'actionnement, grâce aux deux ensembles d'ergots 406, 408, comme précisé ci-avant, puisque les deux pédales 110, 210 sont toutes les deux dans leur position d'actionnement.

Pour libérer la rotation de la roue 12, 14 et du pivot 20 il suffit de ramener les deux pédales dans leur position de repos. Le retour des deux pédales à leur position de repos est favorisé par la lame ressort 271 et le ressort de compression 260 qui se détendent tous les deux.

Bien entendu, il est possible d'effectuer simultanément le blocage du pivot 20 et de la(les) roue(s) 12, 14. Il suffit de faire passer simultanément les deux pédales de leur position de repos à leur position d'actionnement, par exemple en appuyant avec le pied à la fois sur les deux extrémités 111 et 211 des deux pédales pour entraîner simultanément les butée 302 et contre butée 304. Dans ce cas, les opérations décrites ci-dessus se produisent ensemble pour bloquer à la fois le pivot 20 et la roue 12, 14 par rapport au carter 10.

A la description faite ci-dessus, il apparaît nettement que la roulette selon l'invention présente une structure qui lui permet de répondre aux buts de l'invention et qui lui confère des avantages réels sur le plan industriel, par le fait qu'elle est constituée de pièces qui, dans leur grande majorité, peuvent être facilement obtenues par moulage en matière plastique ou analogue, et qui peuvent tout aussi facilement être assemblées pour former la roulette.

Il est précisé que les figures 1 à 6 représentent essentiellement un premier mode de réalisation de la roulette selon l'invention, mais qu'il peut exister d'autres modes de réalisation qui répondent à la définition de cette invention.

Notamment, dans ce premier mode de réalisation, la roulette comporte des pièces animées entre elle de mouvements relatifs comme décrit ci-dessus. Cependant, l'inversion des fonctions relatives de ces pièces est également comprise dans le champ de protection de l'invention.

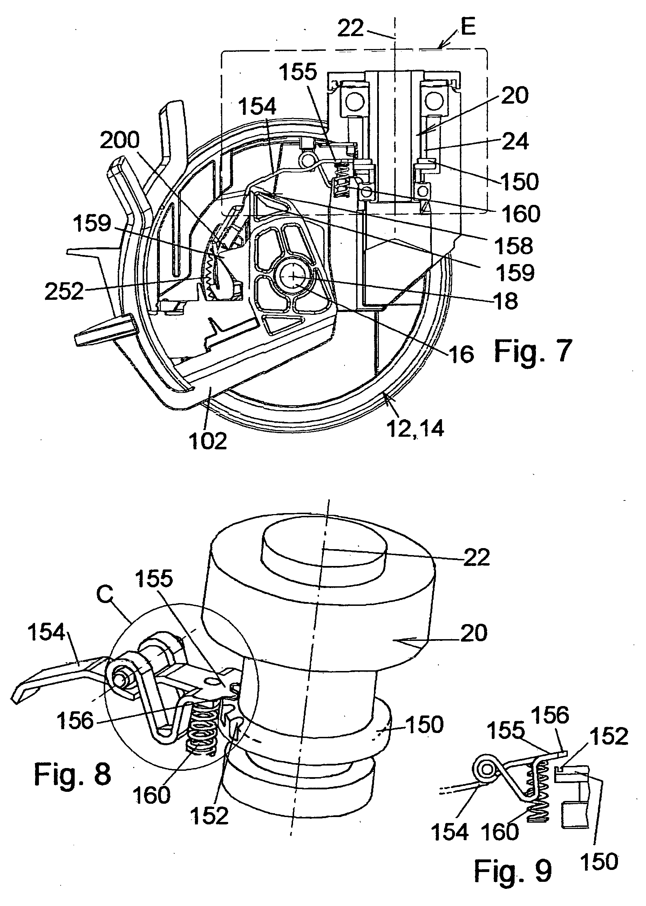

Tel est le cas, par exemple, d'une seconde réalisation de la roulette selon l'invention qui est illustrée sur les figures 7 à 9.

En effet, il est rappelé que, dans le premier mode de réalisation de la roulette en accord avec les figures 1 à 6, le levier 154 est agencé de façon que, lorsqu'il est actionné, son extrémité 155 est soulevée quand la partie en saillie 159 solidaire sur la première pédale 110 agit sur l'autre extrémité de ce levier pour bloquer le pivot 20 par engrenage des crans 156 dans les crans 152, le ressort 160 étant alors bandé de façon à permettre, par traction élastique, l'abaissement de l'extrémité 155 quand est commandé le déblocage de la rotation du pivot 20 par désengrenage des crans 156 des crans 152.

Selon la mention faite ci-dessus relative à l'inversion des fonctions, dans le second mode de réalisation de la roulette illustré sur la figures 7 à 9, ce levier 154 est en revanche agencé de façon que, lors de son actionnement, son extrémité 155 soit abaissée (à l'inverse de ce qui se produit avec le premier mode de réalisation rappelé ci-dessus) quand la partie en saillie 159 solidaire sur la première pédale 110 agit sur l'autre extrémité de ce levier pour bloquer le pivot 20 par engrenage des crans 156 dans les crans 152, le ressort 160 étant alors dans ce cas comprimé, de façon à permettre, par poussée élastique, le relevage de cette extrémité 155 lorsqu'il est nécessaire de débloquer le pivot 20 en désengrenant les crans 156 des crans 152.

Il est aussi à noter que, dans ce second mode de réalisation selon les figures 7 à 9, le pivot 20 présente une structure différente de celle illustrée sur les figures 1 à 6. Cette différence réside essentiellement dans le fait qu'il comporte, non pas un seul roulement du type à billes ou analogues, mais deux, un à chaque extrémité du pivot, pour donner à la roulette une meilleure stabilité et plus de fiabilité.

## Revendications

1. Roulette à blocages combinés comprenant :
- un carter (10),
- au moins une roue (12, 14),
- des moyens pour monter la roue en rotation par rapport au carter sur un arbre (16) défini selon un premier axe (18),
- un pivot (20) défini selon un second axe (22),
- des moyens (24) pour monter le pivot (20) en rotation par rapport au carter (10) de façon que le second axe (22) soit sensiblement perpendiculaire au premier axe (18),
- des premiers moyens de blocage commandables (100) pour bloquer la rotation du pivot (20) par rapport au carter (10),
- des premiers moyens de commande (102) pour actionner lesdits premiers moyens de blocage commandables (100),
- des seconds moyens de blocage commandables (200) pour bloquer la rotation de la roue (12, 14) par rapport au carter (10), et
- des seconds moyens de commande (202) pour actionner lesdits seconds moyens de blocage commandables (200),
**caractérisée par le fait qu'**elle comporte en outre des moyens (300) pour coupler lesdits premiers et seconds moyens de commande (102, 202) de façon que :
• lorsque les premiers moyens de blocage commandables (100) sont seuls actionnés par lesdits premiers moyens de commande, les seconds moyens de blocage commandables (200) ne sont pas actionnés, et que
• lorsque au moins les seconds moyens de blocage commandables (200) sont actionnés par lesdits seconds moyens de commande, les premiers moyens de blocage commandables (100) sont eux aussi actionnés par lesdits premiers moyens de commande (102).

2. Roulette selon la revendication 1, **caractérisée par le fait que** les premiers et seconds moyens de commande (102, 202) pour actionner respectivement les premiers et seconds moyens de blocage commandables (100, 200) comportent respectivement une première pédale (110) et une seconde pédale (210) montées toutes les deux en rotation sur ledit arbre (16), chaque pédale (110, 210) ayant au moins une extrémité qui émerge du carter (10), chaque pédale (110, 210) étant monté rotative sur ledit arbre (16) entre deux positions dites "position de repos" et "position d'actionnement", la position de repos étant celle dans laquelle aucune pédale n'actionne les moyens de blocage commandables correspondants (100, 200), et la position d'actionnement étant celle dans laquelle les deux pédales actionnent les moyens de blocage commandables correspondants (100, 200).

3. Roulette selon la revendication 2, **caractérisée par le fait que** les moyens (300) pour coupler lesdits premiers et seconds moyens de commande (102, 202) sont constitués d'une butée (302) réalisée sur la première pédale (110) et d'une contre butée (304) réalisée sur la seconde pédale (210), ces deux butée et contre butée (302, 304) étant agencées l'une par rapport à l'autre sur leur pédale respective de façon :
• que la contre butée (304) soit au contact de la butée (302) lorsque les deux pédales (110, 210) sont toutes les deux dans leur position de repos,
• que, lorsque la première pédale (110) est seule entraînée en rotation autour du premier axe (18) pour passer de sa position de repos à sa position d'actionnement, la butée (302) s'éloigne de la contre butée (304),
• et que, lorsque la seconde pédale (210) est entraînée en rotation autour du premier axe (18) pour passer de sa position de repos à sa position d'actionnement, la contre butée (304) entraîne la butée (302) dans le même mouvement de rotation, et entraîne donc corrélativement la première pédale (110) pour la faire passer, elle aussi, de sa position de repos à sa position d'actionnement.

4. Roulette selon l'une des revendications 1 à 3, **caractérisée par le fait qu'**elle comporte en outre des moyens de liaison (400) montés en coopération entre les deux pédales (110, 210), ces moyens de liaison étant agencés de façon que les deux pédales soient légèrement maintenues l'une par rapport dans au moins une position donnée, et peuvent être dégagées de cette position donnée lorsqu'elles sont soumises à un couple de forces relativement faible.

5. Roulette selon la revendication 4, **caractérisée par le fait que** les moyens de liaison (400) sont constitués d'un orifice (402) cylindrique de révolution réalisé sur l'une (210) des deux pédales, l'axe de cet orifice étant confondu avec le premier axe (18), d'au moins une partie de manchon (404) cylindrique de révolution réalisée en saillie sur l'autre pédale (110) pour plonger dans ledit orifice (402), cette partie de manchon ayant un diamètre au plus égal à celui du dit orifice (402), de deux ensembles d'ergots (406, 408) réalisés respectivement sur les faces cylindriques en regard de l'orifice (402) et de la partie de manchon (404), de façon qu'au moins un ergot d'un ensemble coopère par engrenage entre deux ergots de l'autre ensemble et soit apte à surmonter les ergots de l'autre ensemble par déformation élastique.

6. Roulette selon l'une des revendications 1 à 5, **caractérisée par le fait que** les premiers moyens de blocage commandables (100) pour bloquer la rotation du pivot (20) par rapport au carter (10) comportent :
• une couronne (150) comportant des premiers crans mâles et femelles (152), ladite couronne étant montée en coopération avec ledit pivot (20) de façon coaxiale,
• un premier levier (154), une extrémité (155) du premier levier comportant au moins un deuxième cran mâle (156), ce premier levier étant monté rotatif entre une première position et une seconde position par rapport au carter (10) de façon que, dans la première position du premier levier, le deuxième cran mâle (156) pénètre dans l'un des premiers crans femelles (152), et que, dans la seconde position du premier levier, le deuxième cran mâle (156) ne coopère avec aucun des premiers crans (152);
• des premiers moyens de rappel élastiques (160) pour tendre à ramener le premier levier (154) de sa seconde position à sa première position, et
• des premiers moyens (158) pour commander la rotation du premier levier (154) entre ses première et seconde positions, ces premiers moyens de commande de la rotation du premier levier étant montés en coopération sur la première pédale (110).

7. Roulette selon l'une des revendications 1 à 6, **caractérisée par le fait que** les seconds moyens de blocage commandables (200) pour bloquer la rotation de la roue (12, 14) par rapport au carter comportent :
• des troisièmes crans mâles et femelles (252) réalisés sur la face (254) de la roue à bloquer, qui est tournée vers le carter (10),
• un second levier (256) monté rotatif sur ledit carter par une première extrémité (281) autour d'un troisième axe (280) sensiblement parallèle au premier axe (18), ce second levier portant au moins un quatrième cran mâle (258) complémentaire des troisièmes crans femelles (252), ce second levier (256) étant monté rotatif par rapport au carter (10) entre une troisième position et une quatrième position de façon que, dans la troisième position du second levier, le quatrième cran mâle (258) pénètre dans l'un des troisièmes crans femelles (252) et que, dans la quatrième position du second levier, le quatrième cran (258) ne coopère avec aucun des troisièmes crans (252),
• des moyens de tension élastiques (270) pour tendre à maintenir le second levier dans sa quatrième position, et
• des seconds moyens (290) pour commander la rotation du second levier (256) entre ses quatrième et troisième positions, ces seconds moyens de commande de la rotation du second levier étant montés en coopération sur la seconde pédale (210).

8. Roulette selon la revendication 7, **caractérisée par le fait qu'**ele comporte en outre des troisièmes moyens de rappel commandables (260) pour tendre à faire passer ladite seconde pédale (210) de sa position d'actionnement à sa position de repos.

9. Roulette selon l'une des revendications 7 et 8, **caractérisée par le fait que** les moyens de tension élastiques (270) pour tendre à maintenir le second levier dans sa quatrième position sont constitués d'une lame ressort (271) dont une première extrémité (272) est solidaire de la seconde extrémité (283) du second levier (256) de façon à former avec ce second levier sensiblement un V, la seconde extrémité (273) de la lame ressort (271) coopérant avec le carter (10) par glissement au contact.

## Patentansprüche

1. Rollrad mit kombinierten Sperren, das umfasst:
- ein Gehäuse (10),
- wenigstens ein Rad (12, 14),
- Mittel, um das Rad drehbar in Bezug auf das Gehäuse an einer Welle (16), die längs einer ersten Achse (18) definiert ist, zu montieren,
- einen Drehzapfen (20), der längs einer zweiten Achse (22) definiert ist,
- Mittel (24), um den Drehzapfen (20) drehbar in Bezug auf das Gehäuse (10) in der Weise zu montieren, dass die zweite Achse (22) zu der ersten Achse (18) im Wesentlichen senkrecht ist,
- erste steuerbare Sperrmittel (100), um die Drehung des Drehzapfens (20) in Bezug auf das Gehäuse (10) zu sperren,
- erste Steuermittel (102), um die ersten steuerbaren Sperrmittel (100) zu betätigen,
- zweite steuerbare Sperrmittel (200), um die Drehung des Rades (12, 14) in Bezug auf das Gehäuse (10) zu sperren, und
- zweite Steuermittel (202), um die zweiten steuerbaren Sperrmittel (200) zu betätigen,
**dadurch gekennzeichnet, dass** es außerdem Mittel (300) umfasst, um die ersten und zweiten Steuermittel (102, 202) in der Weise zu koppeln, dass:
- dann, wenn die ersten steuerbaren Sperrmittel (100) nur durch die ersten Steuermittel betätigt werden, die zweiten steuerbaren Sperrmittel (200) nicht betätigt werden, und dass
- dann, wenn wenigstens die zweiten steuerbaren Sperrmittel (200) durch die zweiten Steuermittel betätigt werden, die ersten steuerbaren Sperrmittel (100) ihrerseits ebenfalls durch die ersten Steuermittel (102) betätigt werden.

2. Rollrad nach Anspruch 1, **dadurch gekennzeichnet, dass** die ersten und zweiten Steuermittel (102, 202) zum Betätigen der ersten bzw. zweiten steuerbaren Sperrmittel (100, 200) ein erstes Pedal (110) bzw. ein zweites Pedal (210) aufweisen, die beide drehbar an der Welle (16) montiert sind, wobei jedes Pedal (110, 210) wenigstens ein Ende besitzt, das von dem Gehäuse (10) ausgeht, wobei jedes Pedal (110, 210) drehbar an der Welle (16) zwischen zwei Positionen, einer so genannten "Ruheposition" und einer sogenannten "Betätigungsposition", montiert ist, wobei die Ruheposition jene ist, in der jedes Pedal die entsprechenden steuerbaren Sperrmittel (100, 200) nicht betätigt, und die Betätigungsposition jene ist, in der die zwei Pedale die entsprechenden steuerbaren Sperrmittel (100, 200) betätigen.

3. Rollrad nach Anspruch 2, **dadurch gekennzeichnet, dass** die Mittel (300) zum Koppeln der ersten und zweiten Steuermittel (102, 202) durch einen Anschlag (302), der an dem ersten Pedal (110) verwirklicht ist, und durch einen Gegenanschlag (304), der an dem zweiten Pedal (210) verwirklicht ist, gebildet sind, wobei dieser Anschlag und dieser Gegenanschlag (302, 304) relativ zueinander an ihrem jeweiligen Pedal in der Weise angeordnet sind:
- dass der Gegenanschlag (304) mit dem Anschlag (302) in Kontakt ist, wenn beide Pedale (110, 210) in ihrer Ruheposition sind,
- dass dann, wenn nur das erste Pedal (110) rotatorisch um die erste Achse (18) angetrieben wird, um aus seiner Ruheposition in seine Betätigungsposition überzugehen, der Anschlag (302) sich von dem Gegenanschlag (304) entfernt, und
- dass dann, wenn das zweite Pedal (210) rotatorisch um die erste Achse (18) angetrieben wird, um sich aus seiner Ruheposition in seine Betätigungsposition zu bewegen, der Gegenanschlag (304) den Anschlag (302) zu derselben Drehbewegung antreibt und daher das erste Pedal (110) korrelativ antreibt, um es ebenfalls zu veranlassen, sich aus seiner Ruheposition in seine Betätigungsposition zu bewegen.

4. Rollrad nach einem der Ansprüche 1 bis 3, **dadurch gekennzeichnet, dass** es außerdem Verbindungsmittel (400) umfasst, die in Zusammenwirkung mit den zwei Pedalen (110, 210) montiert sind, wobei diese Verbindungsmittel in der Weise angeordnet sind, dass die zwei Pedale relativ zueinander wenigstens in einer gegebenen Position leicht gehalten werden und aus dieser gegebenen Position gelöst werden können, wenn sie einem verhältnismäßig schwachen Kräftepaar unterliegen.

5. Rollrad nach Anspruch 4, **dadurch gekennzeichnet, dass** die Verbindungsmittel (400) gebildet sind aus einer rotationssymmetrischen, zylindrischen Öffnung (402), die in einem (210) der zwei Pedale verwirklicht ist, wobei die Achse dieser Öffnung mit der ersten Achse (18) zusammenfällt, aus wenigstens einem rotationssymmetrischen, zylindrischen Buchsenteil (404), das am anderen Pedal (110) vorstehend verwirklicht ist, um in die Öffnung (402) einzudringen, wobei dieses Buchsenteil einen Durchmesser besitzt, der höchstens gleich jenem der Öffnung (402) ist, und aus zwei Nasenanordnungen (406, 408), die an den zylindrischen Flächen gegenüber der Öffnung (402) bzw. des Buchsenteils (404) verwirklicht sind, derart, dass wenigstens eine Nase einer Anordnung durch Kämmung zwischen zwei Nasen der anderen Anordnung zusammenwirkt und durch elastische Verformung die Nasen der anderen Anordnung überwinden kann.

6. Rollrad nach einem der Ansprüche 1 bis 5, **dadurch gekennzeichnet, dass** die ersten steuerbaren Sperrmittel (100) zum Sperren der Drehung des Drehzapfens (20) in Bezug auf das Gehäuse (10) umfassen:
- einen Kranz (150), der erste Rasten und Kerben (152) aufweist, wobei der Kranz in Zusammenwirkung mit dem Drehzapfen (20) koaxial montiert ist,
- einen ersten Hebel (154), wobei ein Ende (155) des ersten Hebels wenigstens eine zweite Raste (156) aufweist, wobei dieser erste Hebel drehbar zwischen einer ersten Position und einer zweiten Position in Bezug auf das Gehäuse (10) montiert ist, derart, dass in der ersten Position des ersten Hebels die zweite Raste (156) in eine der ersten Kerben (152) eindringt und dass in der zweiten Position des ersten Hebels die zweite Raste (156) mit keiner der ersten Kerben (152) zusammenwirkt,
- erste elastische Rückstellmittel (160), die bestrebt sind, den ersten Hebel (154) aus seiner zweiten Position in die erste Position zurückzuführen, und
- erste Mittel (158), um die Drehung des ersten Hebels (154) zwischen seiner ersten und seiner zweiten Position zu steuern, wobei diese ersten Steuermittel für die Drehung des ersten Hebels in Zusammenwirkung mit dem ersten Pedal (110) montiert sind.

7. Rollrad nach einem der Ansprüche 1 bis 6, **dadurch gekennzeichnet, dass** die zweiten steuerbaren Sperrmittel (200) zum Sperren der Drehung des Rades (12, 14) in Bezug auf das Gehäuse umfassen:
- dritte Rasten und Kerben (252), die an der Fläche (254) des zu sperrenden Rades verwirklicht sind, das zu dem Gehäuse (10) gedreht ist,
- einen zweiten Hebel (256), der drehbar am Gehäuse durch ein erstes Ende (281) um eine dritte Achse (280), die zu der ersten Achse (18) im Wesentlichen parallel ist, montiert ist, wobei dieser zweite Hebel wenigstens eine vierte Raste (258), die zu den dritten Kerben (252) komplementär ist, trägt, wobei dieser zweite Hebel (256) drehbar in Bezug auf das Gehäuse (10) zwischen einer dritten Position und einer vierten Position montiert ist, derart, dass in der dritten Position des zweiten Hebels die vierte Raste (258) in eine der dritten Kerben (252) eindringt und dass in der vierten Position des zweiten Hebels die vierte Raste (258) mit keiner der dritten Kerben (252) zusammenwirkt,
- elastische Spannmittel (270), die bestrebt sind, den zweiten Hebel in seiner vierten Position zu halten, und
- zweite Mittel (290) zum Steuern der Drehung des zweiten Hebels (256) zwischen seiner vierten und seiner dritten Position, wobei diese zweiten Steuermittel für die Drehung des zweiten Hebels in Zusammenwirkung mit dem zweiten Pedal (210) montiert sind.

8. Rollrad nach Anspruch 7, **dadurch gekennzeichnet, dass** es außerdem dritte steuerbare Rückstellmittel (260) umfasst, die bestrebt sind, das zweite Pedal (210) zu veranlassen, sich aus seiner Betätigungsposition in seine Ruheposition zu bewegen.

9. Rollrad nach den Ansprüchen 7 und 8, **dadurch gekennzeichnet, dass** die elastischen Spannmittel (270), die bestrebt sind, den zweiten Hebel in seiner vierten Position zu halten, durch eine Blattfeder (271) gebildet sind, wovon ein erstes Ende (272) mit dem zweiten Ende (283) des zweiten Hebels (256) verbunden ist, derart, dass es mit dem zweiten Hebel im Wesentlichen ein V bildet, wobei das zweite Ende (273) der Blattfeder (271) mit dem Gehäuse (10) durch Gleitkontakt zusammenwirkt.

## Claims

1. A castor with combined blocking, comprising:
• a casing (10);
• at least one wheel (12, 14);
• means for mounting the wheel to rotate relative to the casing on a shaft (16) defined on a first axis (18);
• a swivel (20) defined on a second axis (22);
• means (24) for mounting the swivel (20) to pivot relative to the casing (10) with the second axis (22) substantially perpendicular to the first axis (18);
• first controllable blocking means (100) for blocking pivoting of the swivel (20) relative to the casing (10);
• first control means (102) for actuating said first controllable blocking means (100);
• second controllable blocking means (200) for blocking rotation of the wheel (12, 14) relative to the casing (10); and
• second control means (202) for actuating said second controllable blocking means (200),
**characterized by** the fact that it further comprises means (300) for coupling said first and second control means (102, 202) in such a manner that:
• when the first controllable blocking means (100) are actuated on their own by said first control means, the second controllable blocking means (200) are not actuated; and
• when at least the second controllable blocking means (200) are actuated by said second control means, the first controllable blocking means (100) are also actuated by said first control means (102).

2. A castor according to claim 1, **characterized by** the fact that the first and second control means (102, 202) for actuating respectively the first and second controllable blocking means (100, 200) comprise respectively a first pedal (110) and a second pedal (210) both pivotally mounted on said shaft (16), each pedal (110, 210) having at least one end that emerges from the casing (10), each pedal (110, 210) being pivotally mounted on said shaft (16) to pivot between a "rest" position and an "actuation" position, the rest position being the position in which neither pedal actuates the corresponding controllable blocking means (100, 200), and the actuation position being the position in which both pedals actuate the corresponding controllable blocking means (100, 200).

3. A castor according to claim 2, **characterized by** the fact that the means (300) for coupling said first and second control means (102, 202) together are constituted by an abutment (302) made on the first pedal (110) and by a companion abutment (304) made on the second pedal (210), the abutment and companion abutment (302, 304) being arranged relative to each other on their respective pedals in such a manner that:
• the companion abutment (304) is in contact with the abutment (302) when both pedals (110, 210) are in their rest position;
• when the first pedal (110) is driven on its own to pivot about the first axis (18) to pass from its rest position to its actuation position, the abutment (302) moves away from the companion abutment (304); and
• when the second pedal (210) is pivoted about the first axis (18) to pass from its rest position to its actuation position, the companion abutment (304) entrains the abutment (302) in the same pivoting movement, and therefore correspondingly entrains the first pedal (110) to cause it also to go from its rest position to its actuation position.

4. A castor according to any one of claims 1 to 3, **characterized by** the fact that it further includes link means (400) mounted in co-operation between the two pedals (110, 210), these link means being arranged in such a manner that both pedals are lightly held relative to each other in a given position, and may be disengaged from this given position when they are subjected to a relatively low level of torque.

5. A castor according to claim 4, **characterized by** the fact that the link means (400) are constituted: by a circularly cylindrical orifice (402) made in one of the two pedals (210), the axis of the orifice coinciding with the first axis (18); by at least one circularly cylindrical sleeve portion (404) projecting from the other pedal (110) to engage in said orifice (402), said sleeve portion being of a diameter no greater than that of said orifice (402); and two sets of lugs (406, 408) made respectively on the facing cylindrical faces of the orifice (402) and of the sleeve portion (404) in such a manner that at least one lug in one set co-operates by meshing between two lugs of the other set and is suitable for passing over the lugs of the other set by elastic deformation.

6. A castor according to any one of claims 1 to 5, **characterized by** the fact that the first controllable blocking means (100) for blocking pivoting of the swivel (20) relative to the casing (10) comprise:
• a ring (150) having male and female first catches (152), said ring being mounted in co-operation with said swivel (20) in coaxial manner;
• a first lever (154), one end (155) of the first lever including at least one male second catch (156), the first lever being mounted to pivot between a first position and a second position relative to the casing (10) in such a manner that, in the first position of the first lever the male second catch (156) penetrates into one of the female first catches (152), and in the second position of the first lever the male second catch (156) does not co-operate with any of the first catches (152);
• first resilient return means (160) for urging the first lever (154) to return from its second position to its first position; and
• first means (158) for causing the first lever (154) to pivot between its first and second positions, said first means for causing the first lever to pivot being mounted in co-operation on the first pedal (110).

7. A castor according to any one of claims 1 to 6, **characterized by** the fact that the second controllable blocking means (200) for blocking rotation of the wheel (12, 14) relative to the casing comprise:
• male and female third catches (252) made on the face (254) of the wheel for blocking that faces towards the casing (10);
• a second lever (256) pivotally mounted on said casing via a first end (281) about a third axis (280) substantially parallel to the first axis (18), the second lever carrying at least a male fourth catch (258) complementary to the female third catches (252), the second lever (256) being mounted to pivot relative to the casing (10) between a third position and a fourth position in such a manner that, in the third position of the second lever, the male fourth catch (258) penetrates into one of the female third catches (252), and in the fourth position of the second lever, the fourth catch (258) does not co-operate with any of the third catches (252);
• resilient tensioning means (270) for tending to hold the second lever in its fourth position; and
• second means (290) for causing the second lever (256) to pivot between its fourth and third positions, these second means for causing the second lever to pivot being mounted in co-operation on the second pedal (210).

8. A castor according to claim 7, **characterized by** the fact that it further includes third controllable return means (260) for tending to cause said second pedal (210) to pass from its actuation position to its rest position.

9. A castor according to claim 7 or claim 8, **characterized by** the fact that the resilient tensioning means (270) for tending to hold the second lever in its fourth position are constituted by a spring blade (271) having a first end (272) secured to the second end (283) of the second lever (256) in such a manner as to co-operate with said second lever to form substantially a V-shape, the second end (273) of the spring blade (271) co-operating with the casing (10) by sliding in contact therewith.
